# EUROPÄISCHE PATENTSCHRIFT

(11) **EP 2 098 391 B1**
(45) Veröffentlichungstag und Bekanntmachung des Hinweises auf die Patenterteilung: **23.01.2013**
(21) Anmeldenummer: 09003264.0
(22) Anmeldetag: 06.03.2009
(51) Int. Cl.: B60G 21/05

(54) **Verbundlenkerachse und Verfahren zur Herstellung einer Verbundlenkerachse**
Compound steer axle and method for its manufacture
Axe de direction composite et procédé de fabrication d'un axe de direction composite

(30) Priorität: 07.03.2008 DE 102008013183
(43) Veröffentlichungstag der Anmeldung: 09.09.2009
(73) Patentinhaber: Benteler Automobiltechnik GmbH, 33102 Paderborn (DE)
(72) Erfinder: Roxel, Andreas, 59329 Wadersloh (DE); Bürger, Manfred, 33181 Bad Wünnenberg (DE)
(74) Vertreter: Griepenstroh, Jörg

(56) Entgegenhaltungen:
- WO-A1-95/13931
- WO-A1-2004/041564
- DE-A1- 10 336 800
- FR-A1- 2 857 302
- JP-A- 2005 306 177

## Beschreibung

Die Erfindung betrifft eine Verbundlenkerachse für Kraftfahrzeuge mit zwei seitlichen Längslenkern, die durch ein Torsionsprofil verbunden sind, sowie ein Verfahren zur Herstellung einer Verbundlenkerachse. Eine gattungsgemäße Verbundlenkerachse ist aus der WO 95/13931A bekannt.

Verbundlenkerachsen kombinieren die Vorteile eines einfachen Aufbaus bei geringem Raumbedarf und guten kinematischen Eigenschaften. Das die beiden Längslenker verbindende Torsionsprofil, auch als Querträger bezeichnet, wirkt als Torsionsstab, so dass sich bei gleichzeitigem Einfedern eine Längslenkercharakteristik und bei wechselseitigem Einfedern eine Schräglenkercharakteristik ergibt.

Es sind diverse Vorschläge bekannt, wie das Torsionsprofil einer Verbundlenkerachse ausgestaltet sein soll, um diesen auf der einen Seite biegesteif, auf der anderen Seite aber auch ausreichend torsionsweich zu gestalten. Aus der DE 44 16 725 A1 beispielsweise geht eine Verbundlenkerachse hervor mit zwei radtragenden, elastisch am Aufbau angelenkten und starren Längslenkern, die durch einen biegesteifen, aber torsionsweichen Querträger miteinander verschweißt sind. Der Querträger besteht über die gesamte Länge aus einem Rohrprofil, das an beiden Enden einen torsionssteifen Querschnitt und im mittleren Bereich einen torsionsweichen U-, V-, L-, X- oder ähnlichen Querschnitt mit mindestens einem doppelwandigen Profilschenkel aufweist.

Aus der DE 199 49 341 A1 ist eine Verbundlenkerachse für Kraftfahrzeuge bekannt mit zwei durch einen Querträger verbundenen Längslenkern, wobei der Querträger aus einem Hohlprofil mit einem einlagigen, bereichsweise offenen Mittelabschnitt besteht, an den sich beidseitig rohrförmig geschlossene Enden anschließen.

Ein gleichartiges Konzept offenbart die DE 101 22 998 A1. Der Querträger ist rohrartig gestaltet und weist im Mittelabschnitt einen ovalen, langgestreckten Ausschnitt auf.

Zum Stand der Technik zählt ebenfalls eine Fahrzeugachse gemäß der DE 195 33 479 C2. Der Querträger dieser Achse weist eine Aussparung auf, die sich axial zur Rohrkörperlängsachse erstreckt, wobei die Aussparung in ihren Randbereichen zumindest abschnittsweise durch Stege eingefasst ist, die innerhalb des Rohrkörpers ausgeführt sind. Die Stege sind stark nach innen abgewinkelt, wobei die Höhe der Stege etwa der Breite der Aussparung im Rohrkörper entsprechen soll.

Bei der Auslegung des Torsionsprofils sind sowohl Aspekte der Achskinematik und Bauteilsteifigkeit als auch Aspekte der Betriebsfestigkeit zu berücksichtigen. Das Profil des Torsionsprofils bestimmt durch seine Biege-und Torsionssteifigkeit und durch die Lage seines Schubmittelpunktes die Achskinematik und die Lage des Momentanpoles für das Wanken. Mithin ist die Konzeption einer Verbundlenkerachse an hohe technische Anforderungen gestellt.

Daneben besteht im Automobilbau zur Steigerung der Produktivität ein generelles Bestreben nach einer möglichst wirtschaftlichen und rationellen Herstellung der Kraftfahrzeugkomponenten in möglichst leichter Bauweise bei gleichzeitiger Steigerung der Qualität der Produkte. Diesen Anforderungen unterliegen auch Verbundlenkerachsen.

Wesentliche Bedeutung für die Funktion einer Verbundlenkerachse hat folglich - wie oben ausgeführt - das Torsionsprofil, welches die rechte und linke Achshälfte miteinander verbindet. Das Torsionsprofil muss beim Tordieren der Achse eine definierte Nachgiebigkeit aufweisen, aber auch hohe Steifigkeit unter Längs- und Querbelastung besitzen. Beide Anforderungen stehen mitunter in einem Widerspruch zueinander. Kommt dann noch die Forderung nach einem möglichst geringen Gewicht der Verbundlenkerachse hinzu, ist deren Auslegung häufig eine Kompromisslösung.

Torsionsprofile mit einem U- oder V-förmig konfigurierten Profilquerschnitt oder einer Kombination derselben ohne Hinterschnitte können leicht in einem Umformwerkzeug gefertigt werden. Diese Profile haben jedoch den Nachteil, dass sich die gewünschten Torsionsraten oftmals nur über eine Wandstärkenänderung realisieren lassen. Auch treten an den freien Beschnittkanten der Schenkel hohe Spannungen auf. Gleichzeitig lassen sich bei Auslegung auf eine bestimmte Torsionssteifigkeit nur begrenzt hohe Seiten-, Spur- und Sturzsteifigkeiten aufbringen. Darüber hinaus ist das Bauteilgewicht des Torsionsprofils eng verbunden mit der gewünschten Torsionsrate.

Es ist daher Aufgabe der Erfindung, eine Verbundlenkerachse in ihrer dynamischen Leistungsfähigkeit, insbesondere in ihrer Torsions- und Biegesteifigkeit sowie Schwingfestigkeit, zu verbessern sowie ein Verfahren zu ihrer Herstellung aufzuzeigen.

Die Lösung dieser Aufgabe besteht nach der Erfindung in einer Verbundlenkerachse gemäß den Merkmalen von Patentanspruch 1. Das Verfahren ist Gegenstand von Patentanspruch 11.

Kernpunkt der Erfindung bildet die Maßnahme, dass das Torsionsprofil in seinem Mittelabschnitt einen Omega(Ω)-förmigen Querschnitt besitzt. Dieser Omega(Ω)-förmige Querschnitt weist einen bauchigen, nach außen gewölbten Bereich auf, der eine größere Querschnittsbreite besitzt als die Seitenschenkel im unteren Bereich. Diese erfindungsgemäße Querschnittsgeometrie des Torsionsprofils führt zu folgenden Vorteilen:
- Der Querschnitt mit Hinterschnitten bzw. der doppelt gekrümmten Form der Seitenschenkel des Torsionsprofils im Mittelabschnitt kann je nach Anforderungen an das Bauteil in eine gezielte Richtung (Breite oder Höhe) gestreckt werden, um die gewünschte Torsionsrate bei möglichst geringem Gewicht einzustellen.
- Durch die infolge der Omega-Form (Ω) nach außen abgestellten Beschnittkanten der Seitenschenkel werden die Kantenspannungen verringert.
- Durch die Omega-Form lassen sich hohe Seiten-, Spur- und Sturzsteifigkeiten, auch bei geringsten Torsionssteifigkeiten, einstellen.
- In der Folge ergibt sich ein geringes Gewicht verbunden mit hoher Steifigkeit und definierter Torsionsnachgiebigkeit.
- Durch eine Variation des Querschnitts über die Länge des Torsionsprofils vom Mittelabschnitt zu den längsträgerseitigen Enden hin wird gezielt auf die Achseigenschaften eingewirkt.

Vorteilhafte Ausgestaltungen und Weiterbildungen des grundsätzlichen Erfindungsgedankens sind Gegenstand der abhängigen Ansprüche.

Der Querschnitt des Torsionsprofils variiert über seine Länge und besitzt einen Mittelteil und sich an den Mittelteil anschließende längsträgerseitige Endabschnitte, die einen anderen Querschnitt aufweisen als der Mittelteil. Der Mittelteil ist im Querschnitt im Wesentlichen Omega(Ω)-förmig konfiguriert, wohingegen die längsträgerseitigen Endabschnitte im Querschnitt U-förmig konfiguriert sind. Der Übergang von dem Omega(Ω)-förmigen Querschnitt zum U-förmigen Querschnitt ist vorzugsweise fließend.

Als besonders vorteilhaft wird angesehen, dass das Torsionsprofil aus einer rechteckigen Metallplatine geformt sein kann. Das bedeutet, dass das Ausgangsmaterial nicht in besonderer Weise konfiguriert bzw. zugeschnitten sein muss. Das Zuschneiden ist dadurch einfacher und kostengünstiger.

Die rechteckige Ausgangskontur führt allerdings dazu, dass die Höhe des zu dem Torsionsprofils umgeformten Blechbauteils variiert. Die Höhe wird zwischen dem Steg und den freien Enden der Seitenschenkel gemessen.

Aufgrund der stärkeren Profilierung im Mitteilteil zur Ausbildung des Omega(Q)-förmigen Querschnitts ergibt sich, dass bei unveränderter Wandstärke der Metallplatine das Torsionsprofil in dem Mittelabschnitt eine geringere Höhe aufweist als an den längsträgerseitigen Endabschnitten. Die Geometrie im Mittelteil muss daher so gewählt werden, dass bei geringerer Höhe die gleichen Torsionssteifigkeitswerte erreicht werden wie in den längsträgerseitigen Endabschnitten. Auch aus diesem Grund ist der Mittelteil stärker profiliert bzw. umgeformt als die längsträgerseitigen Endabschnitte.

Konkret sollen die Seitenschenkel jeweils zwei gegensinnig gekrümmte Bogenabschnitte aufweisen, wobei ein oberer, sich an den Steg anschließender Bogenabschnitt vom Inneren des Torsionsprofils gesehen nach außen gekrümmt ist und ein unterer Bogenabschnitt nach innen gekrümmt ist, wobei eine zwischen den Scheitelpunkten der unteren Bogenabschnitte gemessene lichte Weite kleiner ist als die lichte Weite zwischen den oberen Bogenabschnitten. Mit anderen Worten ist der Omega(Ω)-förmige Mittelteil mit einer Engstelle versehen, die durch die Scheitelpunkte der unteren Bogenabschnitte definiert wird. Der Mittelabschnitt ist hinterschnitten ausgeführt.

Zudem soll sich der Abstand der Scheitelpunkte der unteren Bogenabschnitte vom Steg vom Mittelteil ausgehend zu den längsträgerseitigen Endabschnitten vergrößern. Das bedeutet umgekehrt, dass die freien Enden der Seitenschenkel vom Mittelteil ausgehend zu den längsträgerseitigen Endabschnitten hin kürzer werden, da die oberen Bogenabschnitte größer werden.

Gleichzeitig kann die Krümmung der oberen Bogenabschnitte vom Mittelteil ausgehend zu den längsträgerseitigen Endabschnitten hin abnehmen, so dass das Torsionsprofil an den Endabschnitten wesentlich weniger bauchig ist und vorzugsweise U-förmig konfiguriert ist. Unter einer U-Form ist im Sinne der Erfindung ein im Wesentlichen hinterschneidungsfreier Innenraum eines von drei Seiten umschlossenen Hohlraums zu verstehen, dahingegen wird unter einem Omega(Ω)-förmigen Querschnitt ein Querschnitt verstanden, der einen bauchigen, hinterschnittenen Innenraum aufweist.

In bevorzugter Ausführungsform ist der Innenraum des Torsionsprofils im Bereich der Endabschnitte somit hinterschneidungsfrei, wobei sich jeder der Endabschnitte über einen Bereich von 10 % bis 30 % der Gesamtlänge des Torsionsprofils erstreckt. Die Länge der hinterschneidungsfreien und hinterschnittenen Bereiche, dass heißt die Länge der Omega(Ω)-förmigen und U-förmigen Bereiche, bestimmt das Torsionsverhalten der gesamten Verbundlenkerachse. Die Lenkverhältnisse sind auf den jeweiligen Anwendungsfall abzustimmen.

Es ist insbesondere zu berücksichtigen, dass in den Endabschnitten zwischen den Seitenschenkeln Schließbleche angeordnet sein können. Die Länge der Schließbleche ist insbesondere auf die Länge der Endabschnitte abgestimmt. Je kürzer die Schließbleche sind, desto geringer ist die Torsionssteifigkeit. Mit zunehmender Länge der Schließbleche nimmt die Torsionssteifigkeit zu. Die Schließbleche haben eine wichtige Funktion im Hinblick auf die Anbindung des Torsionsprofils an die Längsträger. Die Schließbleche befinden sich grundsätzlich zwischen den Seitenschenkeln, und zwar in der Nähe des die Seitenschenkel verbindenden Stegs. Der Abstand der Schließbleche vom Steg kann variieren und nimmt insbesondere in Richtung der längsträgerseitigen Endabschnitte hin zu. Die dem Mitteilteil zugewandten Enden der Schließbleche können mit dem Steg in Kontakt stehen und mit diesem verschweißt sein. Da der Steg grundsätzlich eine geringere Breite hat als die Mündungsseite des Torsionsprofils, kann die Breite der Schließbleche zum Mittelteil des Torsionsprofils hin abnehmen.

Die Schließbleche werden gewissermaßen über die Mündung der U-förmigen Endabschnitte in Richtung des Stegs zwischen die Seitenschenkel geführt. Dies wäre bei den im Querschnitt Omega(Ω)-fömigen Bereichen aufgrund der Hinterschneidung nicht möglich. Die Breite des Schließblechs ist somit exakt auf die Breite der nicht hinterschnittenen Endabschnitte abgestimmt. Zudem können die Schließbleche eine in Richtung zum Steg weisende Sicke besitzen, die zum Entlasten des Anschweißbereiches dient.

Die Seitenschenkel weisen bevorzugt zwei gegensinnig gekrümmte Bogenabschnitte auf. Durch den Krümmungsverlauf und deren Radien kann gezielt auf die Querschnittsgeometrie Einfluss genommen werden und die vom Profil eingeschlossene Fläche. Hierdurch ist eine auf die dynamischen Belastungen abgestimmte Auslegung der Widerstandsmomente möglich. Vorzugsweise ist der obere, sich an den Steg anschließende Bogenabschnitt nach außen gekrümmt, wohingegen der sich hieran anschließende, untere Bogenabschnitt nach innen gekrümmt ist. Dadurch wird die Omegaform definiert.

Der die beiden Seitenschenkel verbindende Steg des Torsionsprofils umfasst bevorzugt einen mittleren Firstabschnitt, an den sich beidseitig je ein Schrägschenkel anschließt. Der Firstabschnitt kann eine Bogenform mit konstanter oder variierender Krümmung besitzen. Bei einem gekrümmten Verlauf des Firstabschnitts kann die Krümmung im Firstabschnitt stärker sein als eine mögliche Krümmung der Schrägschenkel, mithin besitzt der Firstabschnitt eine Krümmung mit einem Radius, der kleiner ist als der Radius einer Krümmung der Schrägschenkel.

Die freien Enden der Seitenschenkel sind nach außen gerichtet. Hierdurch können, wie erwähnt, die Kantenspannungen an den Beschnittkanten verringert werden.

Die Erfindung betrifft auch ein Verfahren zur Herstellung einer Verbundlenkerachse, wie sie vorstehend beschrieben worden ist. Bei dem erfindungsgemäßen Verfahren wird als Ausgangsmaterial für das Torsionsprofil eine rechteckig konfigurierte Metallplatine verwendet, die in einem ersten Umformschritt zu einem hinterschneidungsfreien Vorformling umgeformt wird. Dies kann in einem Gesenkwerkzeug erfolgen. Dieser erste Umformschritt dient im Wesentlichen dazu, die Konturierung der Seitenschenkel festzulegen, wobei die Seitenschenkel im mittleren Bereich des Vorformlings stärker umgeformt werden als in den Endabschnitten. Bei gleich bleibender Materialstärke führt dies dazu, dass die Metallplatine im mittleren Bereich eingeschnürt wird. Natürlich kommt es auch im Bereich der späteren Endabschnitte des Torsionsprofils zu einer Einschnürung. Diese ist jedoch geringer als im mittleren Bereich.

In einem weiteren Umformschritt werden die Seitenschenkel gegenüber dem mittleren Steg abgewinkelt. Dadurch wird der von den dann gegenüberliegenden Seitenschenkeln begrenzte Innenraum des Torsionsprofils gebildet. Das Torsionsprofil befindet sich nun in der Endkontur. Es versteht sich, dass zur vollständigen Herstellung der Verbundlenkerachse das Torsionsprofil mit den Längsträgern verbunden, insbesondere verschweißt wird.

Bei dem erfindungsgemäßen Herstellungsverfahren kommt hinzu, dass in die hinterschneidungsfreien Endabschnitte des Torsionsprofils jeweils ein Schließblech eingelegt und mit dem Torsionsprofil verschweißt wird. Das Schließblech wird vor dem Einschweißen zugeschnitten und mit einer in Richtung zum Steg weisenden Sicke versehen, so dass das Schließblech an die lichte Weite des Innenraums in dem hinterschneidungsfreien Endabschnitt angepasst ist. Schließlich wird das Schließblech zusammen mit dem Torsionsprofil mit dem Längsträger verschweißt.

Bei dem erfindungsgemäßen Verfahren wird die Länge des Schließblechs, aber auch die Länge der hinterschneidungsfreien Bereiche aufeinander abgestimmt, um im Anbindungsbereich möglichst die gleichen Steifigkeitswerte zu erreichen wie in dem stärker konturierten Mittelbereich des Torsionsprofils.

Der wesentliche Vorteil des erfindungsgemäßen Verfahrens liegt jedoch darin, dass eine rechteckige Metallplatine als Ausgangsform verwendet werden kann, wobei durch geschickte Konturierung des Torsionsprofils eine Verbundlenkerachse geschaffen werden kann, die in ihrer dynamischen Leistungsfähigkeit, insbesondere ihrer Torsions- und Biegesteifigkeit sowie ihrer Schwingfestigkeit, vergleichbaren Verbundlenkerachsen, bei denen besonders zugeschnittene Metallplatinen als Ausgangsform zur Anwendung kommen, in nichts nachsteht und insbesondere kostengünstiger zu fertigen ist.

Die Erfindung ist nachfolgend anhand eines Ausführungsbeispiels näher beschrieben. Es zeigen:
- Figur 1: in perspektivischer Darstellungsweise eine erfindungsgemäße Verbundlenkerachse;
- Figur 2: einen Vertikalschnitt durch den Mittelabschnitt eines Torsionsprofils der Verbundlenkerachse;
- Figur 3: einen weiteren Vertikalschnitt durch einen Mittelabschnitt eines Torsionsprofils der Verbundlenkerachse;
- Figur 4: einen Vertikalschnitt durch den Endabschnitt eines Torsionsprofils der Verbundlenkerachse;
- Figur 5: eine perspektivische Ansicht einer weiteren Ausführungsform einer Verbundlenkerachse;
- Figur 6: die Verbundlenkerachse der Figur 5 in einer Ansicht von unten;
- Figur 7: ein Vorformling des Torsionsprofils im Querschnitt;
- Figur 8: ein Vorformling des Torsionsprofils in perspektivischer Ansicht;
- Figur 9: einen Querschnitt durch ein Torsionsprofil der Figur 10;
- Figur 10: ein Torsionsprofil in perspektivischer Darstellung;
- Figur 11 bis 14: Querschnitte A - A, B -B, C - C, D - D, wie in Figur 6 angegeben.

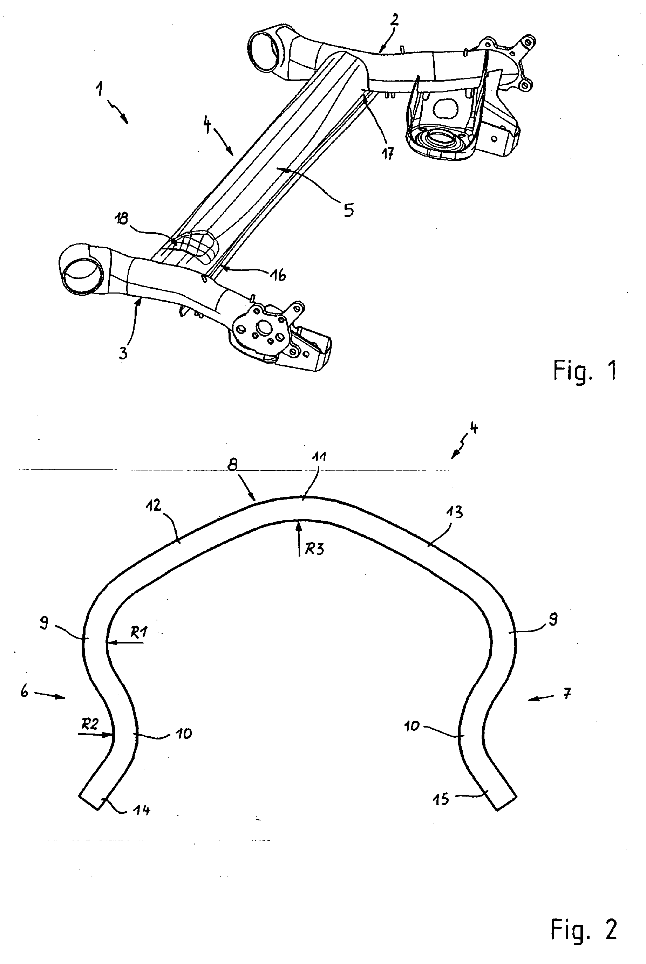

Figur 1 zeigt eine Verbundlenkerachse, konkret eine Verbundlenkerhinterachse, 1 in perspektivischer Darstellungsweise.

Die Verbundlenkerhinterachse 1 umfasst im Wesentlichen zwei radführende Längslenker 2, 3 und ein die beiden Längslenker 2, 3 verbindendes Torsionsprofil 4. Das Torsionsprofil 4 ist einteilig aus einer Stahlblechplatine geformt und weist einen offenen Mittelabschnitt 5 mit zwei Seitenschenkeln 6, 7 und einen die Seitenschenkel 6, 7 verbindenden Steg 8 auf (siehe hierzu Figur 2).

Im Mittelabschnitt 5 besitzt das Torsionsprofil 4 einen Omega(Ω)-förmigen Querschnitt. Die Seitenschenkel 6, 7 weisen zwei gegensinnig gekrümmte Bogenabschnitte 9, 10 auf. Der sich an den Steg 8 anschließende obere Bogenabschnitt 9 ist nach außen gekrümmt, wohingegen der untere Bogenabschnitt 10 nach innen gekrümmt ist. Durch Wahl der Krümmung R1, R2 in den Bogenabschnitten 9, 10 und der Länge der Bogenabschnitte 9, 10 kann gezielt auf die Querschnittsgeometrie und den Flächeninhalt des Torsionsprofils 4 Einfluss genommen werden und hierdurch die Torsionssteifigkeit sowie die Seiten-, Spur- und Sturzsteifigkeit eingestellt werden.

Der Steg 8 weist einen mittleren Firstabschnitt 11 auf, an den sich beidseitig ein Schrägschenkel 12, 13 anschließt. Man erkennt, dass der Firstabschnitt 11 eine Krümmung mit einem Radius R3 aufweist.

Die freien Enden 14, 15 der Seitenschenkel 6, 7 sind nach außen gerichtet. Hierdurch können Kantenspannungen verringert werden, was sich vorteilhaft auf die Dauerfestigkeit und Lebensdauer des Torsionsprofils 4 auswirkt. Auch der Rissanfälligkeit wird hierdurch entgegengewirkt. Die Beschnittkanten an den Enden 14, 15 werden aus dem Kraftverlauf in den Seitenschenkeln 6, 7 verlegt und mögliche nachteilige Einflüsse aus dem Platinenbeschnitt, beispielsweise Mikrorisse, aus dem Bereich der Hauptspannungen und des Hauptkraftverlaufs heraus verlagert.

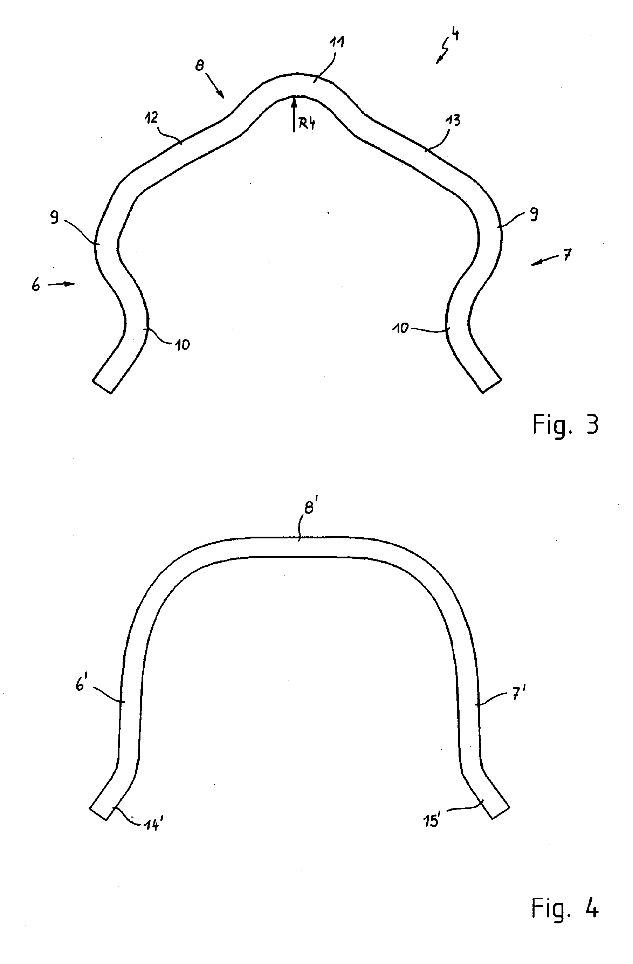

Eine weitere Querschnittskontur des Torsionsprofils 4 im Mittelabschnitt 5 zeigt Figur 3. Der Firstabschnitt 11 ist höher und stärker gekrümmt mit einem Radius R4 ausgeführt. Hierdurch kann die Seitensteifigkeit, insbesondere die Sturzstefigkeit, des Torsionsprofils 4 weiter erhöht werden. An den Steg 8' schließen sich die für das Omega-Profil charakteristischen Bogenabschnitte 9 bzw. 10 an.

An den Mittelabschnitt 5 des Torsionsprofils 4 schließen sich jeweils zu den Längslenkern 2, 3 hin ein Endabschnitt 16, 17 an. Die Endabschnitte 16, 17 besitzen einen U-förmigen Querschnitt, wie dies in der Figur 4 ersichtlich ist. Der Steg 8' in den Endabschnitten 16, 17 verläuft annähernd waagerecht ohne wesentliche Krümmung. Die Seitenschenkel 6', 7' sind in den Endabschnitten 16, 17 gradlinig gestreckt, wobei die freien Enden 14', 15' ebenfalls nach außen gestellt sind.

In der Figur 1 erkennt man noch eine Einformung 18 im Endabschnitt 16 des Torsionsprofils 4. Dies dient zur Durchführung von anderen Kraftfahrzeugkomponenten, beispielsweise einer Rohrleitung der Kraftstoffversorgungsanlage.

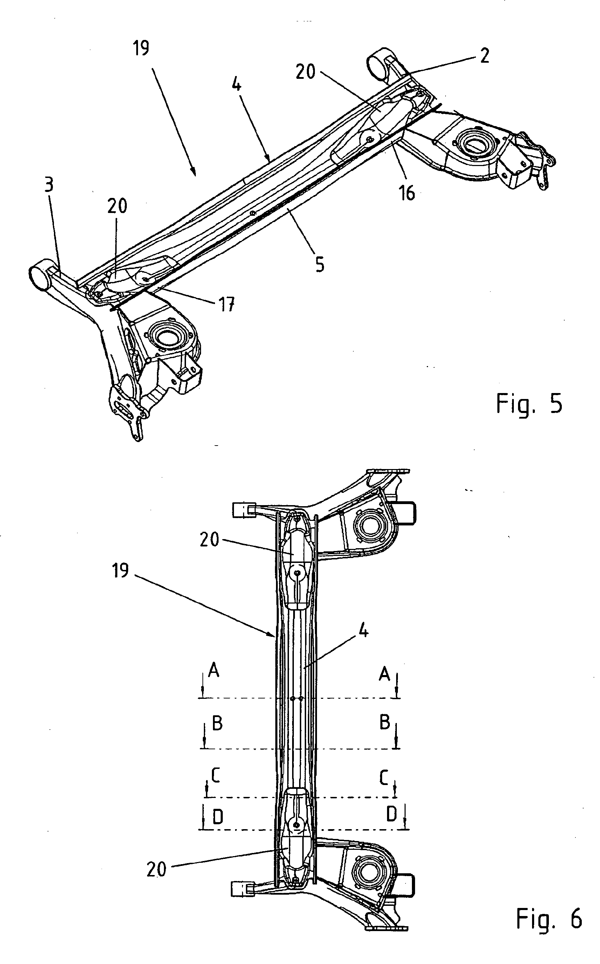

Die Figuren 5 und 6 zeigen eine Ausführungsform einer Verbundlenkerachse 19 in Blickrichtung von unten, auf den offenen Bereich des Torsionsprofils 4. Zur Beschreibung dieser Ausführungsform werden die zu den Figuren 1 bis 4 eingeführten Bezugszeichen weiterhin verwendet.

Die Ausführungsform der Figur 5 unterscheidet sich von derjenigen der Figur 1 durch eine etwas andere Konturierung des Torsionsprofils 4 und zudem dadurch, dass in den Endabschnitten 16, 17 des Torsionsprofils 4 Schließbleche 20 angeordnet sind. Es ist zu erkennen, dass sich die Schließbleche 20 nicht mündungsseitig, sondern zwischen den Seitenschenkeln des Torsionsprofils 4 im Bereich der Endabschnitte 16, 17 erstrecken. Die Endabschnitte 16, 17 sind hinterschneidungsfrei ausgebildet, so dass die Schließbleche 20 in der Perspektive der Figur 5 quasi von oben in das Torsionsprofil 4 eingelegt werden können. Sie müssen nicht von den Enden des Torsionsprofils 4 eingeschoben werden. Die Länge der Schließbleche 20 ist bei dieser Art der Montage durch die Hinterschneidung im Mittelabschnitt 5 begrenzt.

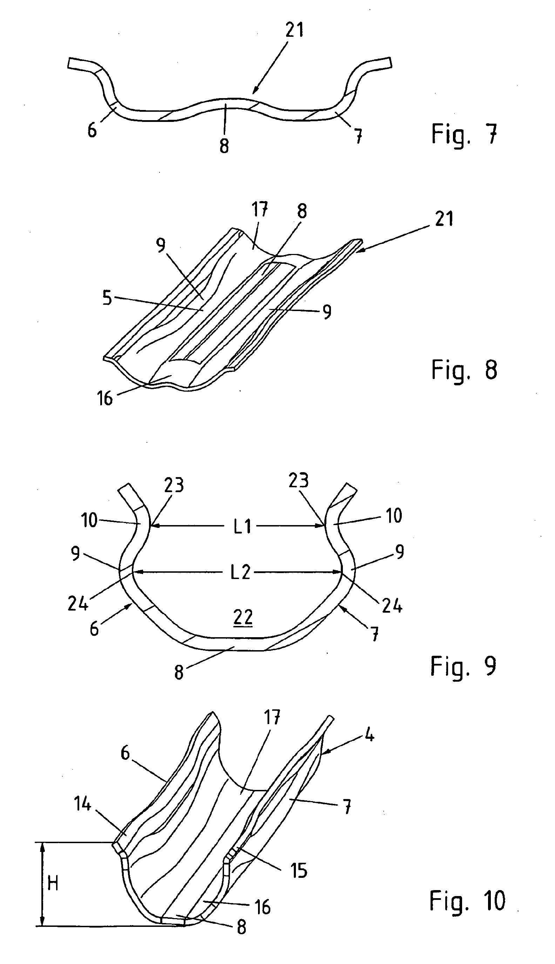

Die Figuren 7 und 8 zeigen einen Vorformling 21, der aus einer rechteckigen Metallplatine hergestellt worden ist. Während der Umformung der rechteckigen Metallplatine wurde im mittleren Bereich der etwas nach oben ausgestellte Steg 8 ausgebildet, an den sich beiderseits die identisch konfigurierten Seitenschenkel 6, 7 anschließen. Aus der Darstellung der Figur 8 wird deutlich, dass die Konturierung der Seitenschenkel 6, 7 in Längsrichtung variiert. Deutlich ist zu erkennen, dass im Mittelabschnitt 5 ein oberer Bogenabschnitt 9 ausgebildet ist, der an den Steg 8 angrenzt. In den Endabschnitten 16, 17 ist dieser Bogenabschnitt 9 nicht mehr vorhanden. Er läuft vom Mittelabschnitt 5 zu den Endabschnitten 16, 17 hin aus.

Dieser Vorformling wird dann zu der Endkontur, wie sie in den Figuren 9 und 10 dargestellt ist, in einem weiteren Umformschritt umgeformt. Hierzu werden die Seitenschenkel 6, 7 in der Bildebene der Figur 7 quasi nach oben gegenüber dem Steg 8 einwärts gerichtet gebogen, so dass sich die gewünschte Omega(Ω)-förmige Konturierung ergibt.

Figur 9 zeigt einen Querschnitt durch den mittleren Bereich 5 des Torsionsprofils 4, wie es in perspektivischer Darstellung in Figur 10 dargestellt ist. Aus der Darstellung der Figur 10 wird nochmals deutlich, dass die unteren Bogenabschnitte 10 zu einer Einschnürung des Profilquerschnitts führen, was eine Hinterschneidung des Innenraums 22 bewirkt. Die Engstelle des Innenraums 22 wird hierbei durch die Scheitelpunkte 23 der unteren Bogenabschnitte der gegenüberliegenden unteren Bogenabschnitte 10 bestimmt. Die lichte Weite L1 zwischen den Scheitelpunkten 23 der unteren Bogenabschnitte 10 ist größer als die lichte Weite L2 zwischen den innenliegenden Scheitelpunkten 24 der oberen Bogenabschnitte 9.

In Figur 10 ist mit H die Höhe bezeichnet, die zwischen dem Steg 8 und den freien Enden 14, 15 der Seitenschenkel 6, 7 gemessen wird. Aufgrund der stärkeren Profilierung im Mittelabschnitt 5 ist die Höhe H im Mittelabschnitt 5 kleiner als in den längsträgerseitigen Endabschnitten 16, 17.

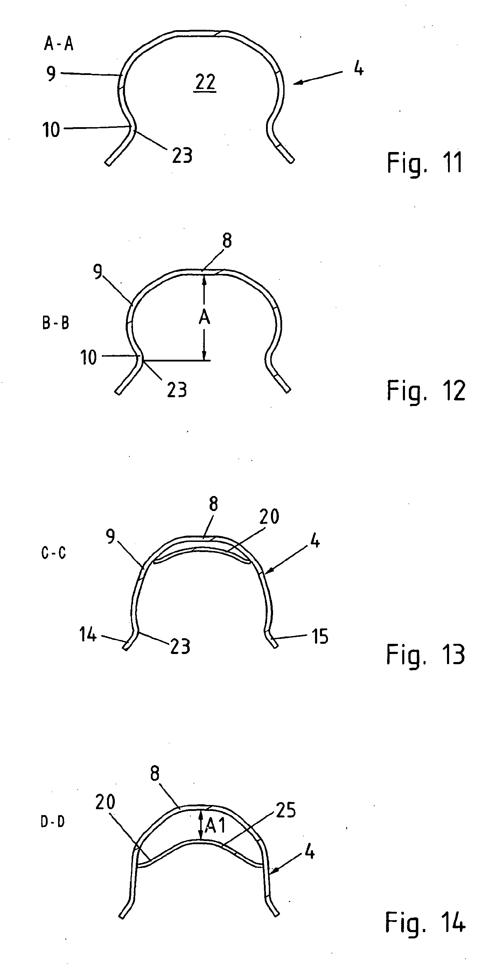

Die Figuren 11 bis 14 zeigen die Schnittebenen, wie sie in Figur 6 eingezeichnet sind. Figur 11 zeigt einen Schnitt durch die Mittelquerebene des Torsionsprofils 4. Deutlich ist die Omega(Ω)-förmige Konturierung zu erkennen.

Die Schnittebene B - B, wie sie in Figur 12 gezeigt ist, liegt noch in dem Mittelabschnitt 5, ist allerdings bereits in Richtung eines Endabschnitts 17 verlagert. Die Abweichungen von dem Querschnitt der Schnittebene A - A gemäß Figur 11 sind noch nicht sehr groß. Der mit A bezeichnete Abstand des Scheitelpunkts 23 des unteren Bogenabschnitts 10 von dem Steg 8 ist noch in etwa gleich groß wie in Figur 11.

Die Schnittebene C - C gemäß Figur 13 liegt bereits in dem nicht hinterschnittenen Endabschnitt 16 des Torsionsprofils. In diesem Endabschnitt befindet sich auch das Schließblech 20, das in dieser Schnittebene relativ nah am Steg 8 liegt und sich somit tief innerhalb des Torsionsprofils 4 befindet. Ein weiterer wesentlicher Unterschied ist, dass der obere Bogenabschnitt 9 abgeflacht ist und dass die freien Enden 14, 15 gegenüber den Schnittebenen A - A und B - B wesentlich kürzer sind. Der Scheitelpunkt 23 hat sich in Richtung der freien Enden 14, 15 verlagert. Der Abstand A zum Steg hat sich vergrößert. Die Höhe H des Torsionsprofils hat zugenommen.

In der noch weiter längsträgerseitig liegenden Schnittebene D - D, wie sie in Figur 14 dargestellt ist, ist zu erkennen, dass die in Figur 13 benachbart der Schnittpunkte 23 äußerst geringfügige Hinterschneidung vollkommen verschwunden ist. Die Krümmung der oberen Bogenabschnitte 9 hat noch weiter abgenommen. Die Bogenabschnitte 9 nähern sich einer Geraden.

Es ist zu erkennen, dass eine Sicke 25 im mittleren Bereich des Schließblechs 20 ausgebildet ist, welche sich in Richtung zum Steg 8 erstreckt. In diesem Bereich ist das Torsionsprofil 4 U-förmig konfiguriert. Der Abstand A1 des Schließblechs 20 vom Steg 8 hat sich vergrößert und nimmt in Richtung zu dem freien Ende des Endabschnittes 17 hin weiter zu, wie anhand der perspektivischen Darstellung der Figur 5 zu erkennen ist.

### Bezugszeichen:

- 1 -: Verbundlenkerachse
- 2 -: Längslenker
- 3 -: Längslenker
- 4 -: Torsionsprofil
- 5 -: Mittelabschnitt
- 6 -: Seitenschenkel
- 6' -: Seitenschenkel
- 7 -: Seitenschenkel
- 7' -: Seitenschenkel
- 8 -: Steg
- 8' -: Steg
- 9 -: oberer Bogenabschnitt v. 6, 7
- 10 -: unterer Bogenabschnitt v. 6, 7
- 11 -: Firstabschnitt
- 12 -: Schrägschenkel
- 13 -: Schrägschenkel
- 14 -: Ende v. 6
- 14' -: Ende v. 6
- 15-: Ende v. 7
- 15' -: Ende v. 7
- 16 -: Endabschnitt v. 4
- 17 -: Endabschnitt v. 4
- 18 -: Einformung
- 19 -: Verbundlenkerachse
- 20 -: Schließblech
- 21 -: Vorformling
- 22 -: Innenraum
- 23 -: Scheitelpunkt
- 24 -: Scheitelpunkt
- 25 -: Sicke
- R1 -: Radius
- R2 -: Radius
- R3 -: Radius
- R4 -: Radius
- L1 -: lichte Weite
- L2 -: lichte Weite
- H -: Höhe
- A -: Abstand
- A1 -: Abstand

## Patentansprüche

1. Verbundlenkerachse für Kraftfahrzeuge, welche zwei durch ein Torsionsprofil (4) verbundene Längslenker (2, 3) umfasst, wobei das Torsionsprofil (4) einen offenen Mittelabschnitt (5) mit zwei Seitenschenkeln (6, 6', 7, 7') und einen die Seitenschenkel (6, 6', 7, 7') verbindenden Steg (8) aufweist, **dadurch gekennzeichnet, dass** das Torsionsprofil (4) einen über seine Länge variierenden Querschnitt besitzt mit einem im Querschnitt Omega-förmigen Mittelteil (5) und im Querschnitt U-förmigen, längsträgerseitigen Endabschnitten (16, 17).

2. Verbundlenkerachse nach Anspruch 1, **dadurch gekennzeichnet, dass** das Torsionsprofil (4) aus einer rechteckigen Metallplatine geformt ist.

3. Verbundlenkerachse nach Anspruch 1 oder 2, **dadurch gekennzeichnet, dass** das Torsionsprofil (4) eine zwischen dem Steg (8) und den freien Enden (14, 14', 15, 15') der Seitenschenkel (6, 6', 7, 7') gemessene Höhe (H) an den längsträgerseitigen Endabschnitten (16, 17) größer ist als in dem Mittelabschnitt (5).

4. Verbundlenkerachse nach einem der Ansprüche 1 bis 3, **dadurch gekennzeichnet, dass** die Seitenschenkel (6, 7) jeweils zwei gegensinnig gekrümmte Bogenabschnitte (9, 10) aufweisen, wobei ein oberer, sich an den Steg (8) anschließender Bogenabschnitt (9) vom Innenraum (22) des Torsionsprofils (4) gesehenen nach außen gekrümmt ist und ein unterer Bogenabschnitt (10) nach innen gekrümmt ist, wobei eine zwischen den Scheitelpunkten (23) der unteren Bogenabschnitten (10) gemessene lichte Weite (L1) kleiner ist als die lichte Weite (L2) zwischen den oberen Bogenabschnitten (9).

5. Verbundlenkerachse nach Anspruch 4, **dadurch gekennzeichnet, dass** der Abstand (A) der Scheitelpunkte (23) der unteren Bogenabschnitte (10) vom Steg (8) vom Mittelabschnitt (5) ausgehend zu den längsträgerseitigen Endabschnitten (16, 17) hin zunimmt.

6. Verbundlenkerachse nach einem der Ansprüche 1 bis 5, **dadurch gekennzeichnet, dass** die Krümmung der oberen Bogenabschnitte (9) vom Mittelabschnitt (5) ausgehend zu den längsträgerseitigen Endabschnitten (16, 17) hin abnimmt.

7. Verbundlenkerachse nach einem der Ansprüche 1 bis 6, **dadurch gekennzeichnet, dass** der Innenraum (22) des Torsionsprofils (4) im Bereich der Endabschnitte (16, 17) hinterschneidungsfrei ist, wobei sich jeder Endabschnitt (16, 17) über eine Länge von 10 bis 30 % der Gesamtlänge des Torsionsprofils (4) erstreckt.

8. Verbundlenkerachse nach einem der Ansprüche 1 bis 7, **dadurch gekennzeichnet, dass** in den Endabschnitten (16, 17) zwischen den Seitenschenkeln (6, 7) Schließbleche (20) angeordnet sind.

9. Verbundlenkerachse nach Anspruch 8, **dadurch gekennzeichnet, dass** der Abstand (A1) der Schließbleche (20) vom Steg (8) in Richtung der längsträgerseitigen Endabschnitte (16, 17) zunimmt.

10. Verbundlenkerachse nach Anspruch 8 oder 9, **dadurch gekennzeichnet, dass** die Schließbleche (20) in Richtung zum Steg (8) weisende Sicke (25) aufweisen.

11. Verfahren zu Herstellung einer Verbundlenkerachse mit den Merkmale wenigstens einem der Ansprüche 1 bis 10, **dadurch gekennzeichnet, dass** eine rechteckige Metallplatine in einem ersten Umformschritt zu einem hinterschneidungsfreien Vorformling (21) umgeformt wird, bei welchem die über die Längserstreckung des Torsionsprofils (4) variierende Verlauf der der Seitenschenkel (6, 7) festgelegt wird, wobei die Seitenschenkel (6, 7) im mittleren Bereich des Vorformlings (21) stärker umgeformt werden als in Endabschnitten (16, 17), so dass die Metallplatine im mittleren Bereich eingeschnürt wird, wobei in einem weiteren Umformschritt die Seitenschenkel (6, 7) gegenüber dem Steg (8) abgewinkelt werden, zur Ausbildung eines von den einander gegenüberliegenden Seitenschenkeln (6, 7) begrenzten Innenraums (22) des Torsionsprofils (4).

12. Verfahren nach Anspruch 11, **dadurch gekennzeichnet, dass** in die im Wesentlichen hinterschneidungsfreien Endabschnitte (16, 17) des Torsionsprofils (4) jeweils ein Schließblech (20) eingelegt und mit dem Torsionsprofil (4) verschweißt wird.

13. Verfahren nach Anspruch 12, **dadurch gekennzeichnet, dass** das Schließblech (20) vor dem Einschweißen mit einer in Richtung zum Steg (8) weisenden Sicke (25) versehen und an die lichte Weite (L1, L2) des Innenraums (22) angepasst wird.

14. Verfahren nach einem der Ansprüche 12 oder 13, **dadurch gekennzeichnet, dass** das Schließblech (20) zusammen mit dem Torsionsprofil (4) mit den Längsträgern (2,-3) verschweißt wird.

## Claims

1. Twist-beam rear axle for motor vehicles, which comprises two trailing arms (2, 3) connected by a torsion profile (4), wherein the torsion profile (4) has an open central section (5) with two side brackets (6, 6', 7, 7') and a web (8) connecting the side brackets (6, 6', 7, 7'), **characterised in that** the torsion profile (4) has a cross-section which varies over its length and which comprises a central section (5) that is omega-shaped in cross-section and end sections (16, 17) at the trailing arms that are U-shaped in cross-section.

2. Twist-beam rear axle according to claim 1, **characterised in that** the torsion profile (4) is formed from a rectangular metal plate.

3. Twist-beam rear axle according to claim 1 or 2, **characterised in that** the torsion profile (4) has a height (H), measured between the web (8) and the free ends (14, 14', 15, 15') of the side brackets (6, 6', 7, 7'), that is greater in the end sections (16, 17) at the trailing arms than in the central section (5).

4. Twist-beam rear axle according to one of claims 1 to 3, **characterised in that** the side brackets (6, 7) each have two curved sections (9, 10) that are curved in opposite directions, wherein an upper curved section (9) which adjoins the web (8) is curved outwards as seen from the interior (22) of the torsion profile (4) and a lower curved section (10) is curved inwards, wherein a clearance (L1) measured between the apexes (23) of the lower curved sections (10) is smaller than the clearance (L2) between the upper curved sections (9).

5. Twist-beam rear axle according to claim 4, **characterised in that** the distance (A) of the apexes (23) of the lower curved sections (10) from the web (8) increases from the central section (5) to the end sections (16, 17) at the trailing arms.

6. Twist-beam rear axle according to one of claims 1 to 5, **characterised in that** the curvature of the upper curved sections (9) decreases from the central section (5) to the end sections (16, 17) at the trailing arms.

7. Twist-beam rear axle according to one of claims 1 to 6, **characterised in that** the interior (22) of the torsion profile (4) is free of undercuts in the region of the end sections (16, 17), each end section (16, 17) extending over a length of 10 to 30% of the total length of the torsion profile (4).

8. Twist-beam rear axle according to one of claims 1 to 7, **characterised in that** strike plates (20) are arranged in the end sections (16, 17) between the side brackets (6, 7).

9. Twist-beam rear axle according to claim 8, **characterised in that** the distance (A1) of the strike plates (20) from the web (8) increases in the direction of the end sections (16, 17) at the trailing arms.

10. Twist-beam rear axle according to claim 8 or 9, **characterised in that** the strike plates (20) have beads (25) pointing in the direction of the web (8).

11. Method for manufacturing a twist-beam rear axle having the features of at least one of claims 1 to 10, **characterised in that** a rectangular metal plate is shaped in a first forming step to produce an undercut-free preform (21) in which the course of the side brackets (6, 7), which varies over the longitudinal extension of the torsion profile (4), is defined, wherein the side brackets (6, 7) are formed in a more pronounced manner in the central region of the preform (21) than in end sections (16, 17) so that the metal plate is constricted in the central region, wherein in a further forming step the side brackets (6, 7) are angled relative to the web (8) in order to create an interior (22) of the torsion profile (4) that is delimited by the side brackets (6, 7) located opposite one another.

12. Method according to claim 11, **characterised in that** in each case a strike plate (20) is placed in the substantially undercut-free end sections (16, 17) of the torsion profile (4) and is welded to the torsion profile (4).

13. Method according to claim 12, **characterised in that**, prior to being welded into place, the strike plate (20) is provided with a bead (25) pointing in the direction of the web (8) and is adapted to the clearance (L1, L2) of the interior (22).

14. Method according to one of claims 12 or 13, **characterised in that** the strike plate (20) together with the torsion profile (4) is welded to the trailing arms (2, 3).

## Revendications

1. Essieu à traverse déformable en torsion pour véhicule automobile, qui comprend deux bras longitudinaux (2, 3) reliés par un profilé de torsion (4), dans lequel le profilé de torsion (4) comprend un tronçon médian ouvert (5) avec deux branches latérales (6, 6', 7, 7') et une âme (8) qui relie les branches latérales (6, 6', 7, 7'),
**caractérisé en ce que** le profilé de torsion (4) possède une section transversale qui varie sur sa longueur avec une partie médiane (5) à section en forme de Omega et avec des tronçons terminaux (16, 17) à section en forme de U du côté des bras longitudinaux.

2. Essieu à traverse déformable en torsion selon la revendication 1, **caractérisé en ce que** le profilé de torsion (4) est mis en forme à partir d'une plaque métallique rectangulaire.

3. Essieu à traverse déformable en torsion selon la revendication 1 ou 2, **caractérisé en ce que** le profilé de torsion (4) présente une hauteur, mesurée entre l'âme (8) et les extrémités libres (14, 14', 15, 15') des branches latérales (6, 6', 7, 7') qui est plus grande au niveau des tronçons terminaux (16, 17) du côté des bras longitudinaux que dans le tronçon médian (5).

4. Essieu à traverse déformable en torsion selon l'une des revendications 1 à 3, **caractérisé en ce que** les branches latérales (6, 7) comportent chacune deux tronçons en arc (9, 10) incurvés en sens opposé, dans lesquels un tronçon en arc supérieur (9), qui se raccorde à l'âme (8), est incurvé vers l'extérieur, vu depuis l'espace intérieur (22) du profilé de torsion (4), et un tronçon en arc inférieur (10) est incurvé vers l'intérieur, et une largeur libre (L1), mesurée entre les sommets (23) des tronçons en arc inférieurs (10) est plus petite que la largeur libre (L2) entre les tronçons en arc supérieurs (9).

5. Essieu à traverse déformable en torsion selon la revendication 4, **caractérisé en ce que** la distance (A) entre les sommets (23) des tronçons en arc inférieurs (10) et l'âme (8) augmente en partant du tronçon médian (5) vers les tronçons terminaux (16, 17) du côté des bras longitudinaux.

6. Essieu à traverse déformable en torsion selon l'une des revendications 1 à 5, **caractérisé en ce que** la courbure des tronçons en arc supérieur (9) diminue en partant du tronçon médian (5) vers les tronçons terminaux (16, 17) du côté des bras longitudinaux.

7. Essieu à traverse déformable en torsion selon l'une des revendications 1 à 6, **caractérisé en ce que** l'espace intérieur (22) du profilé de torsion (4) est dépourvu de contre-dépouilles dans la région des tronçons terminaux (16, 17), et chaque tronçon terminal (16, 17) s'étend sur une longueur de 10 à 30 % de la longueur totale du profilé de torsion (4).

8. Essieu à traverse déformable en torsion selon l'une des revendications 1 à 7, **caractérisé en ce que** des tôles de fermeture (20) sont agencées dans les tronçons terminaux (16, 17) entre les branches latérales (6, 7).

9. Essieu à traverse déformable en torsion selon la revendication 8, **caractérisé en ce que** la distance (A1) entre les tôles de fermeture (20) et l'âme (8) augmente en direction des tronçons terminaux (16, 17) du côté des bras longitudinaux.

10. Essieu à traverse déformable en torsion selon la revendication 8 ou 9, **caractérisé en ce que** les tôles de fermeture (20) comportent des nervures (25) tournées en direction de l'âme (8).

11. Procédé pour la fabrication d'un essieu à traverse déformable en torsion présentant les caractéristiques de l'une au moins des revendications 1 à 10, **caractérisé en ce que** l'on déforme une plaque métallique rectangulaire dans une première étape de déformation pour obtenir une préforme (21) dépourvue de contre-dépouilles, dans laquelle on fixe le tracé, variable sur l'extension longitudinale du profilé de torsion (4), des branches latérales (6, 7), lesdites branches latérales (6, 7) étant déformées plus fortement dans la région médiane de la préforme (21) que dans les tronçons terminaux (16, 17), de sorte que la plaque métallique est rétrécie dans la région médiane, et dans une autre étape de déformation les branches latérales (6, 7) sont pliées par rapport à l'âme (8), pour réaliser un espace intérieur (22) du profilé de torsion (4), délimité par les branches latérales (6, 7) mutuellement opposées.

12. Procédé selon la revendication 11, **caractérisé en ce que**, dans les tronçons terminaux (16, 17) essentiellement dépourvus de contre-dépouilles du profilé de torsion (4), on met respectivement en place une tôle de fermeture (20) et on la soude avec le profilé de torsion (4).

13. Procédé selon la revendication 12, **caractérisé en ce que** la tôle de fermeture (20) est pourvue, avant la soudure, d'une nervure (25) tournée en direction de l'âme (8), et est ajustée à la largeur libre (L1, L2) de l'espace intérieur (22).

14. Procédé selon l'une des revendications 12 ou 13, **caractérisé en ce que** la tôle de fermeture (20) est soudée avec les bras longitudinaux (2, 3) conjointement avec le profilé de torsion (4).
